# EUROPEAN PATENT SPECIFICATION

(11) **EP 2 492 169 B1**
(45) Date of publication and mention of the grant of the patent: **07.05.2014**
(21) Application number: 10824626.5
(22) Date of filing: 12.10.2010
(51) Int. Cl.: B62D 6/00, B62D 5/04, B62D 101/00, B62D 119/00

(54) **ELECTRIC POWER STEERING APPARATUS**
ELEKTRISCHE SERVOLENKVORRICHTUNG
APPAREIL DE DIRECTION ASSISTÉE ÉLECTRIQUE

(30) Priority: 20.10.2009 JP 2009241002
(43) Date of publication of application: 29.08.2012
(73) Proprietor: Honda Motor Co., Ltd., Minato-ku Tokyo 107-8556 (JP)
(72) Inventor: SHIMADA, Yuichi, Wako-shi Saitama 351-0193 (JP); INABA, Kazuhiko, Wako-shi Saitama 351-0193 (JP); NATSUME, Taku, Wako-shi Saitama 351-0193 (JP); KUSATANI, Masaya, Wako-shi Saitama 351-0193 (JP); TAKAGI, Masanori, Wako-shi Saitama 351-0193 (JP); AKASHI, Toshiharu, Wako-shi Saitama 351-0193 (JP); NAKAMURA, Kouji, Wako-shi Saitama 351-0193 (JP); UENO, Akio, Haga-gun Tochigi 321-3325 (JP)
(74) Representative: Prechtel, Jörg
(86) International application number: PCT/JP2010/006056
(87) International publication number: WO 2011/048772

(56) References cited:
- EP-A2- 1 845 010
- JP-A- 11 029 056
- JP-A- 2002 037 102
- JP-A- 2006 142 932
- JP-A- 2009 051 335

## Description

### FIELD OF THE INVENTION

The present invention relates to an electric power steering system which is configured for a plurality of control modes corresponding to different steering properties and enabled to switch the control modes while the vehicle is in motion.

### BACKGROUND OF THE INVENTION

In a known automotive electric power steering system, by taking advantage of the fact that the steering property can be varied by adjusting the steering assist force which the electric motor provides for reducing the effort required to steer the vehicle, it was proposed to allow a selection between a normal mode corresponding to a standard steering property and a sports mode corresponding to a smaller steering assist force and hence a heavier steering effort. See Patent Document 1.

### PRIOR ART DOCUMENT(S)

### PATENT DOCUMENT(S)

Patent Document 1 : JP 11-020727A

### BRIEF SUMMARY OF THE INVENTION

### TASK TO BE ACHIEVED BY THE INVENTION

In such an electric power steering system that allows the control modes to be switched, it is advantageous to allow the control modes to be switched when the vehicle is in motion according to the preference of the vehicle operator. The switch from one mode to another is typically carried out such that the control value is gradually changed from a value for one control mode to a value for another control mode. If this transition time period for changing the control value is too long, the vehicle operator is unable to appreciate the change in the control modes, and may not find this feature of the electric power steering system highly attractive. On the other hand, if this transition time period is too short, the vehicle operator may experience some discomfort.

In EP 1 845 010 A2 on which the preamble of claim 1 is based, when switching the power steering from comfort mode to sport mode, the steering torque is increased from the comfort value beyond the sport mode value to maximum (overshoot) and is then decreased again to Mₛ, so that the driver will sense this switching to the sport mode by transitional overshooting steering effort. On the other hand, when switching back from the sport mode to the comfort mode no such overshoot is generated.

The present invention was made in view of such a recognition by the inventors, and has a primary object to provide an electric power steering system that allows the vehicle operator to appreciate the changes in the control modes without causing any discomfort to the vehicle operator in any way.

### MEANS TO ACCOMPLISH THE TASK

According to the present invention, such an object can be accomplished by providing an electric power steering system (1) in accordance with claim 1. The electric power steering system comprises an electric motor (9) for producing a steering assist force for reducing a steering effort of a vehicle operator and a control unit (21: steering control unit) for determining a control value for the electric motor, the control unit being configured to determine the control value by selecting a map representing a relationship between a vehicle state variable and a control value for each of a plurality of control modes. When switching the control modes, the control unit gradually changes the control value from that obtained from a map corresponding to a preceding control mode to that obtained from a map corresponding to a following control mode, and a different time period of gradual transition from the preceding control mode to the following control mode is selected depending on the preceding and following control modes.

Because a different time period of gradual transition from the preceding control mode to the following control mode is selected depending on the preceding and following control modes, the vehicle operator is enabled to clearly sense the change in the control modes without causing discomfort to the vehicle operator.

According to the present invention, the plurality of control modes include at least a first control mode (normal mode) corresponding to a standard steering property and a second control mode (sports mode) corresponding to a heavier steering property than the first control mode, the transition time period from the second control mode to the first control mode being longer than the transition time period from the first control mode to the second control mode.

Because the transition time period from the first control mode to the second control mode is relative short, and the change in the steering property occurs immediately, the vehicle operator is enabled to sense the change in the control modes. Because the change involves a heavier steering property, even when the change is abrupt, the vehicle operator does not experience any unfamiliar impression. Conversely, because the transition time period from the second control mode to the first control mode is relative long, the steering property is avoided from being made suddenly lighter, and the discomfort of the vehicle operator can be thereby avoided.

According to a second aspect of the present invention, the control unit comprises computing units (the base current computing unit 31, the inertia compensation current computing unit 32 and the damping compensation current computing unit 33) for computing a base control value based on a steering force of a vehicle operator and a vehicle speed, an inertia compensation value based on an inertia of an associated steering system and a damping compensation value based on a damping factor of the associated steering system, and is configured to determine the control value from computation results of these computing units, at least one of the computing units being configured to select a different map for each of a plurality of control modes.

By compensating the base control value with the inertia compensation value, the response delay due to the inertia of the steering system can be improved so that a highly brisk steering impression may be achieved. By compensating the base control value with the damping compensation value, the rotation of the electric motor is controlled so that a stable steering impression can be achieved, and the stability of the vehicle may be ensured.

### EFFECT OF THE INVENTION

According to the present invention, because a different time period of gradual transition from the preceding control mode to the following control mode is selected depending on the preceding and following control modes, the vehicle operator is enabled to appreciate the changes in the control modes without causing any discomfort to the vehicle operator in any way.

### BRIEF DESCRIPTION OF THE SEVERAL VIEWS OF DRAWINGS

Figure 1 is a diagram illustrating an electric power steering system embodying the present invention:
Figure 2 is a functional block diagram showing the overall structure of a control system for the electric power steering system shown in Figure 1; and
Figure 3 is a timing chart showing the mode of operation of the electric power steering system shown in Figure 1.

### DETAILED DESCRIPTION OF THE INVENTION

Now a preferred embodiment of the present invention is described in the following with reference to the appended drawings.

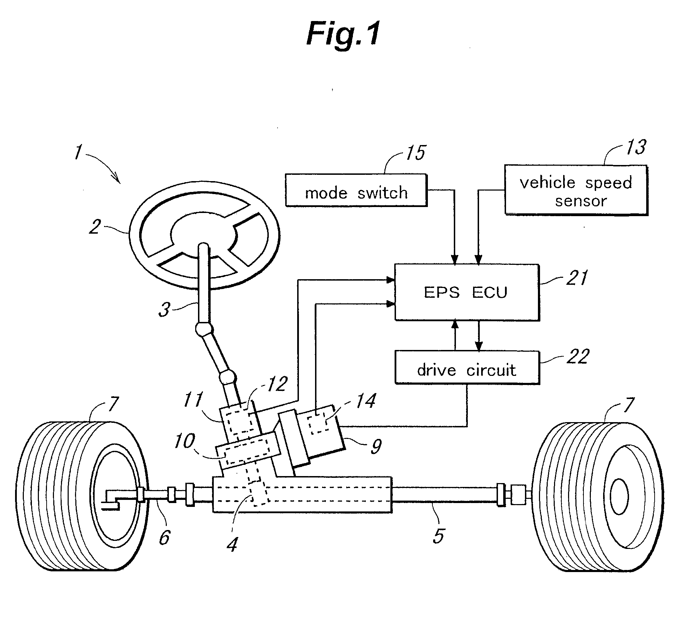

Referring to Figure 1, the electric power steering system 1 embodying the present invention comprises a rack and pinion mechanism including a pinion 4 connected to a steering wheel 2 via a steering shaft 3 and a rack shaft 5 meshing with the pinion 4 and disposed so as to reciprocate in the lateral direction, and the two ends of the rack shaft 5 are connected to the left and right front wheels 7 serving as steerable wheels via tie rods 6, respectively, so that the front wheels 7 are steered in response to the angular movement of the steering wheel 2.

This electric power steering system 1 further comprises an electric motor 9 for generating a steering assist force for reducing the effort required for turning the steering wheel 2, and the drive force of the electric motor 9 is transmitted to the steering shaft 3 via a worm gear mechanism 10 received in a gear box 11 along with the pinion 4.

In the gear box 11 is provided a steering torque sensor 12 for detecting the steering torque that is applied to the pinion 4. A vehicle speed sensor 13 for detecting the traveling speed of the vehicle is provided in an appropriate part of the vehicle body. The electric motor 9 is incorporated with a resolver 14 for detecting the angular position of the electric motor 9. The output signals from the steering torque sensor 12, the vehicle speed sensor 13 and the resolver 14 are forwarded to a steering control device (EPS-ECU) 21 which comprehensively controls the operation of the electric power steering system 1.

The steering control device 21 comprises a microcomputer, ROM, RAM, peripheral circuits, an input interface, an output interface and various drivers, and determines a target current value (control value) for driving the electric motor 9 and forwards the same to a drive circuit 22 for the electric motor 9. The drive circuit 22 essentially consists of a FET bridge circuit that supplies electric power to the electric motor 9 according to the target current value determined by the steering control device 21 so as to control the output torque of the electric motor 9.

The steering control device 21 may be additionally provided with various functions such as the fail safe, self-diagnosis, motor output restriction and external diagnostic communication functions.

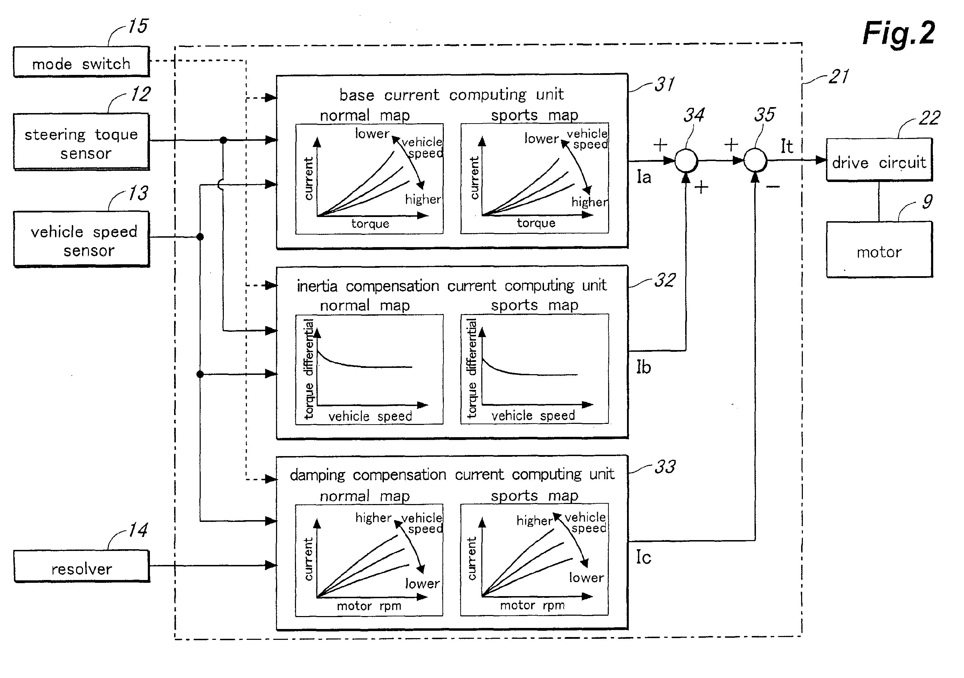

As shown in Figure 2, the steering control device 21 comprises a base current computing unit 31, an inertia compensation current computing unit 32, a damping compensation current computing unit 33, an adder 34 and a subtractor 35. The various components of the steering control device 21 are realized by executing a computer program stored in memory by using a CPU.

The base current computing unit 31 computes a base current value Ia, which provides a basis for the target current value It, according to the steering torque provided by the steering torque sensor 12 and the vehicle speed provided by the vehicle speed sensor 13.

The inertia compensation current computing unit 32 is configured to compensate for the influences of the inertia in the steering system, and computes an inertia compensation current value Ib according to the time differential value of the steering torque provided by the steering torque sensor 12 and the vehicle speed provided by the vehicle speed sensor 13. The inertia compensation current value Ib is added to the base current value Ia at the adder 34 so that the response delay of the steering system owing to the inertia of the steering system is reduced, and a brisk response of the steering system is ensured.

The damping compensation current computing unit 33 is configured to compensate for the influences of the viscous damping effect in the steering system, and computes a damping compensation current value Ic from the rotational speed of the electric motor 9 obtained from the rotational angle of the electric motor 9 detected by the resolver 14 and the vehicle speed provided by the vehicle speed sensor 13. The damping compensation current value Ic is subtracted from the base current value Ia at the subtractor 35 so that a stable steering action may be ensured by appropriately controlling the rotation of the electric motor 9 and the stability of the vehicle behavior may be thereby ensured.

As the steering rotational speed of the steering wheel 2 is proportional to the rotational speed of the electric motor 9, the steering angular speed obtained by time differentiating the steering angle of the steering wheel 2 provided by the steering angle sensor may be used, instead of the rotational speed of the motor.

The base current computing unit 31, the inertia compensation current computing unit 32 and the damping compensation current computing unit 33 are each provided with a plurality of maps each representing a relationship between the corresponding state variable of the vehicle and the corresponding current value for the corresponding control mode. In this particular embodiment, a selection can be made between a normal mode (first control mode) corresponding to a standard steering property and a sports mode (second control mode) corresponding to a smaller steering assist force and hence a heavier steering effort. A normal map is selected for the normal mode, and a sports map is selected for the sports mode in each instance.

The switch over between the normal mode and the sports mode can be accomplished by the vehicle operator operating a mode selection switch 15. The mode selection switch 15 is placed near the vehicle occupant's seat such as on the steering wheel and the shift lever for the vehicle operator to operate while the vehicle is in motion. It is also possible to cause the control modes to be selected in response to the operation of the shift lever for selecting the shift position of the automatic transmission system, for instance, instead of providing the manually operated mode selection switch 15.

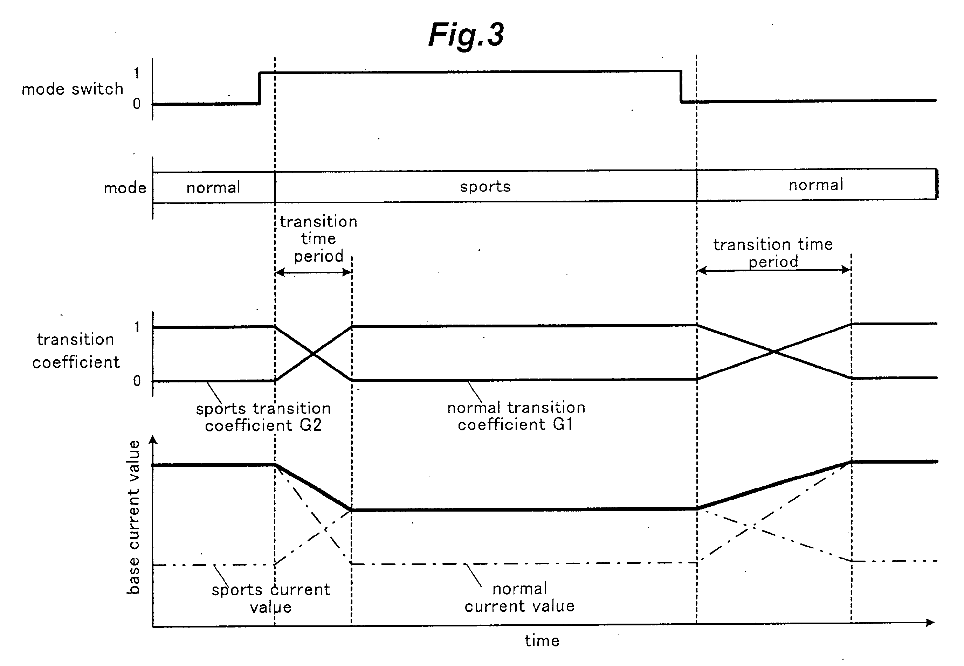

In particular, as shown in Figure 3, when switching the control modes (between the sports mode and the normal mode), the current value based on the map corresponding to the preceding control mode is gradually changed to the current value based on the map corresponding to the following control mode, and the transition time period during which the current value is gradually changed may be selected depending on the controls modes that precede and follow the transition.

More specifically, the transition time period (1.5 seconds, for instance) for the transition from the sports mode to the normal mode is longer than the transition time period (0.5 seconds, for instance) for the transition from the normal mode to the sports mode.

The current value during the transition time period is computed by weighting the normal current value and the sports current value obtained by looking up the normal map and the sports map with a normal transition coefficient G1 and a sports transition coefficient G2 (0 ≦ G1 ≦ 1, 0 ≦ G2 ≦ 1, G1 + G2 = 1), respectively, which may be considered to be similar to the weighting coefficients in weighted averaging.

During the transition time period from the normal mode to the sports mode, the normal transition coefficient G1 is progressively decreased while the sports transition coefficient G2 is progressively increased. Conversely, during the transition time period from the sports mode to the normal mode, the normal transition coefficient G1 is progressively increased while the sports transition coefficient G2 is progressively decreased.

Figure 3 shows only the base current value obtained by the base current computing unit 31, and the inertia compensation current value obtained by the inertia compensation current computing unit 32 and the damping compensation current value obtained by the damping compensation current computing unit 33 are manipulated in a similar manner.

Preferably, immediately after the ignition switch is turned on, the normal mode is selected as the existing control mode. This switching of the control modes in the steering control device 21 may be performed in association with the control of the fuel injection system and the automatic transmission by the engine/transmission control device (FI/AT-ECU) so that the vehicle property may be changed in a harmonized manner. In this case, the control mode information shared by the different control devices should not be renewed until the transition is completed.

The normal map and the sports map are each configured to provide a control value (current value) from a state variable of the vehicle (such as the steering torque and the vehicle speed), and the information required for the map may be stored within a storage device of the steering control unit 21 in a suitable form such as a table and a formula, and may be suitably modified by using a compensation gain as required.

As discussed above, the transition from the normal mode to the sports mode takes place in a relatively short period of time so that the change in the steering impression occurs somewhat promptly. Therefore, the vehicle operator is enabled to clearly appreciate the change in the control modes. As the steering impression becomes heavier, the change in the steering impression does not cause an unfamiliar impression to the vehicle operator. In the case of the transition from the sports mode to the normal mode, as the transmission period is selected to be relatively long, the steering impression is prevented from becoming abruptly lighter, and the change in the steering impression does not cause an unfamiliar impression to the vehicle operator.

In the foregoing example, there were two selections of the control modes, the normal mode and the sports mode. However, it is also possible to provide three or more control modes. For instance, it is possible to add a super sports mode that provides an even heavier steering impression than the sports mode and/or an eco mode that shuts off the electric motor and provides no steering assist force with the aim of reducing power consumption.

Each of the base current computing unit 31, the inertia compensation current computing unit 32 and the damping compensation current computing unit 33 was provided with control maps for different control modes individually in the foregoing embodiment, but the present invention is not limited by this embodiment but may also provide that at least one of the base current computing unit 31, the inertia compensation current computing unit 32 and the damping compensation current computing unit 33 is configured to allow the switch over of the control maps. For instance, only the base current computing unit 31 may be configured to allow the switch over of the control maps.

The steering control unit 21 included the base current computing unit 31, the inertia compensation current computing unit 32 and the damping compensation current computing unit 33 in the foregoing embodiment, but other arrangements are also possible. For instance, either the inertia compensation current computing unit 32 or the damping compensation current computing unit 33 may be omitted. Also, the steering control unit 21 may include other forms of compensation current computing units, such as a compensation current computing unit based on a feed forward control of the steering torque. In such cases also, the control action may be executed by using different maps corresponding to different control modes.

Although the present invention has been described in terms of a preferred embodiment thereof, it is obvious to a person skilled in the art that various alterations and modifications are possible without departing from the scope of the present invention which is set forth in the appended claims.

### GLOSSARY

- 1: electric power steering system
- 2: steering wheel
- 3: steering shaft
- 9: electric motor
- 15: mode selection switch
- 21: steering control unit
- 31: base current computing unit
- 32: inertia compensation current computing unit
- 34: adder
- 35: subtractor

## Claims

1. An electric power steering system comprising an electric motor (9) for producing a steering assist force for reducing a steering effort of a vehicle operator and a control unit (21) for determining a control value (It) for the electric motor, the control unit being configured to determine the control value by selecting a map representing a relationship between a vehicle state variable and a control value for each of a plurality of control modes, wherein the plurality of control modes include at least a first control mode corresponding to a standard steering property and a second control mode corresponding to a heavier steering property than the first control mode,
wherein when switching the control modes, the control unit (21) gradually changes the control value from that obtained from a map corresponding to a preceding control mode to that obtained from a map corresponding to a following control mode, and a different time period of gradual transition from the preceding control mode to the following control mode is selected depending on the preceding and following control modes,
**characterized in that**
the transition time period from the second control mode to the first control mode is longer than the transition time period from the first control mode to the second control mode.

2. The electric power steering system according to claim 1, wherein the control unit comprises computing units (31, 32, 33) for computing a base control value (Ia) based on a steering force of a vehicle operator and a vehicle speed, an inertia compensation value (Ib) based on an inertia of an associated steering system and a damping compensation value (Ic) based on a damping factor of the associated steering system, and is configured to determine the control value from computation results of these computing units, at least one of the computing units being configured to select a different map for each of a plurality of control modes.

## Patentansprüche

1. Elektrisches Servolenksystem, das einen Elektromotor (9) zum Erzeugen einer Lenkunterstützungskraft zum Reduzieren vom Lenkaufwand eines Fahrzeugfahrers sowie eine Steuereinheit (21) zum Bestimmen eines Steuer/Regelwerts (It) für den Elektromotor aufweist, wobei die Steuereinheit konfiguriert ist, um den Steuer/Regelwert durch Auswahl eines Kennfelds zu bestimmen, das eine Beziehung zwischen einer Fahrzeugzustandsgröße und einem Steuer/Regelwert für jeden einer Mehrzahl von Steuermodi repräsentiert, wobei die Mehrzahl von Steuermodi zumindest einen ersten Steuermodus entsprechend einer Standardlenkeigenschaft und einen zweiten Steuermodus entsprechend einer schwereren Lenkeigenschaft als der erste Steuermodus enthalten, worin, wenn die Steuermodi umgeschaltet werden, die Steuereinheit (21) den Steuer/Regelwert von jenem, der aus einem einem vorangehenden Steuermodus entsprechenden Kennfeld erhalten wird, zu jenem, der aus einem einem folgenden Steuermodus entsprechenden Kennfeld erhalten wird, allmählich verändert, und eine unterschiedliche Zeitdauer des allmählichen Übergangs von dem vorangehenden Steuermodus zum folgenden Steuermodus in Abhängigkeit von den vorangehenden und folgenden Steuermodi ausgewählt wird,
**dadurch gekennzeichnet, dass** die Übergangszeitdauer vom zweiten Steuermodus zum ersten Steuermodus länger ist als die Übergangszeitdauer vom ersten Steuermodus zum zweiten Steuermodus.

2. Das elektrische Servolenksystem nach Anspruch 1, worin die Steuereinheit Berechnungseinheiten (31, 32, 33) aufweist, zum Berechnen eines Basissteuer/Regelwerts (Ia) basierend auf einer Lenkkraft des Fahrzeugfahrers und einer Fahrzeuggeschwindigkeit, eines Trägheitskompensationswerts (Ib) basierend auf einer Trägheit eines zugeordneten Lenksystems, und eines Dämpfkompensationswerts (Ic) basierend auf einem Dämpffaktor des zugeordneten Lenksystems, und konfiguriert ist, um den Steuer/Regelwert aus den Rechenergebnissen dieser Berechnungseinheiten zu bestimmen, wobei zumindest eine der Berechnungseinheiten konfiguriert ist, um für jeden einer Mehrzahl von Steuermodi ein unterschiedliches Kennfeld auszuwählen.

## Revendications

1. Système de direction assistée électrique, comprenant un moteur électrique (9) pour produire une force d'assistance de direction pour réduire l'effort de direction d'un opérateur de véhicule, et une unité de commande (21) pour déterminer une valeur de commande (lt) pour le moteur électrique, l'unité de commande étant configurée de manière à déterminer la valeur de commande en sélectionnant une carte représentant une relation entre une variable d'état de véhicule et une valeur de commande pour chacun de la pluralité de modes de commande, dans lequel la pluralité de modes de commande comprend au moins un premier mode de commande qui correspond à une propriété de direction standard, et un deuxième mode de commande qui correspond à une propriété de direction plus lourde que le premier mode de commande,
dans lequel lors de la commutation des modes de commande, l'unité de commande (21) change graduellement la valeur de commande à partir de celle obtenue à partir d'une carte correspondant à un mode de commande précédent jusqu'à celle obtenue à partir d'une carte correspondant à un mode de commande suivant, et une période de temps différente de transition graduelle depuis le mode de commande précédent jusqu'au mode de commande suivant est sélectionnée en fonction des modes de commande précédent et suivant,
**caractérisé en ce que** la période de temps de transition pour passer du deuxième mode de commande au premier mode de commande est plus longue que la période de temps de transition pour passer du premier mode de commande au deuxième mode de commande

2. Système de direction assistée électrique selon la revendication 1, dans lequel l'unité de commande comprend des unités de calcul (31, 32, 33) pour calculer une valeur de commande de base (la) basée sur une force de direction d'un opérateur de véhicule et une vitesse de véhicule, une valeur de compensation d'inertie (lb) basée sur une inertie d'un système de direction associé, et une valeur de compensation d'amortissement (lc) basée sur un facteur d'amortissement du système de direction associé, et est configurée pour déterminer la valeur de commande à partir de résultats de calculs de ces unités de calcul, au moins une des unités de calcul étant configurée pour sélectionner une carte différente pour chacun de la pluralité de modes de commande.
